# EUROPEAN PATENT APPLICATION

(11) **EP 4 411 949 A1**
(43) Date of publication of application: **07.08.2024**
(21) Application number: 23175590.1
(22) Date of filing: 26.05.2023
(51) Int. Cl.: H01M 50/211, H01M 50/264, H01M 50/517, H01M 50/548, H01M 50/557

(54) **BATTERY DEVICE**

(30) Priority: 01.02.2023 CN 202310088004
(71) Applicant: CALB Group Co., Ltd., Changzhou City, Jiangsu Province (CN)
(72) Inventor: XU, Jiuling, Changzhou City, Jiangsu Provice (CN); LIU, Ruijian, Changzhou City, Jiangsu Provice (CN); LIU, Yang, Changzhou City, Jiangsu Provice (CN)
(74) Representative: Becker, Eberhard

(57) **Abstract**

The disclosure relates to the technical field of batteries, and a battery device is disclosed, which includes: a housing (100); a cell (200), which is arranged in the housing (100); the cell (200) includes an electrode sheet (210) and a tab portion (220) drawn from the large surface of the cell (200); an insulating support (300), the insulating support (300) is arranged in the housing (100); the insulating support (300) includes a body portion (310) and a bent portion (320), at least a part of the body portion (310) is arranged between the housing (100) and the tab portion (220); the bent portion (320) is connected to the body portion (310), and the bent portion (320) is bent to one side of the body portion (310), and cooperates with the body portion (310) to form a position-limiting space.

## Description

### BACKGROUND

### Technical Field

The disclosure relates to the technical field of batteries, in particular to a battery device.

### Description of Related Art

When an existing battery device is assembled, it is necessary to bundle the tab portions of the cell together in order to meet the requirement of connecting the tab portions to external structural components. It should be noted that bundling the existing tab portions is am complicated operation. Moreover, based on the existing manufacturing process, in each battery device of the same model, there are differences in the shapes of the tab portions after bundling, which makes it difficult to achieve consistency in shape. Besides, the structural stability of the tab portions after bundling is relatively poor.

### SUMMARY

The present disclosure provides a battery device, which makes it possible to quickly and effectively carry out the bundling process on the tab portion, and improve the stability of the tab portion after bundling.

To achieve the above purpose, the present disclosure provides the following technical solutions:
In a first aspect of the present disclosure, a battery device is provided, which includes: a housing; a cell, the cell is arranged in the housing; the cell includes an electrode sheet and a tab portion drawn from the large surface of the cell; an insulating support, the insulating support is arranged in the housing; the insulating support includes a body portion and a bent portion, at least a part of the body portion is arranged between the housing and the tab portion; the bent portion is connected to the body portion, and the bent portion is bent to one side of the body portion, and cooperates with the body portion to form a position-limiting space; the position-limiting space accommodates at least part of the tab portion, and the bent portion forming the position-limiting space is disposed opposite to at least part of the large surface of the cell.

In the battery device provided by the present disclosure, the housing is provided with a cell and an insulating support. At least part of the body portion of the insulating support is placed between the housing and the tab portion, and the bent portion is connected to the body portion and may be bent relative to the body portion to cooperate with the body portion and form a position-limiting space. At least part of the tab portion in the cell is placed in the position-limiting space. When applying the battery device provided by this disclosure, the tab portion may be placed in the body portion. Then the bent portion is bent, and the tab portion is bundled by using a bent portion opposite to at least part of the large surface of the cell, so that the tab portion is placed in the position-limiting space formed by the bent portion and the body portion. In this manner, it is possible to reduce assembly difficulty, improve assembly efficiency, and decrease manufacturing cost.

It should be noted that the battery device provided by the present disclosure forms a position-limiting space through an insulating support. After the multi-layer tabs are welded, the tab portion may be bundled by bending the bent portion to control the thickness of the tab portion, thereby ensuring the stability of the structure of the tab portion formed by the multi-layer tabs and to avoiding pseudo soldering. Moreover, the position-limiting space may limit the space and placement position occupied by the tab portion in the housing to ensure consistency between tab portions in different battery devices. In this way, it is possible to improve the adaptability of the tab portions in various battery devices to the space in the housing, thereby enhancing space utilization rate in the battery.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural diagram of a battery device provided in an embodiment of the present disclosure.
FIG. 2 is a schematic diagram showing the unfolded state of the bent portion of the battery device provided in an embodiment of the present disclosure.
FIG. 3 is a schematic diagram showing the bending state of the bent portion of the battery device provided in an embodiment of the present disclosure.
FIG. 4 is a partial cross-sectional diagram of the battery device provided in an embodiment of the present disclosure.
FIG. 5 is another schematic structural diagram of the battery device provided in an embodiment of the present disclosure.
FIG. 6 is still another partial cross-sectional diagram of the battery device provided in an embodiment of the present disclosure.
FIG. 7 is a half-sectional schematic diagram of the battery device provided in an embodiment of the present disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

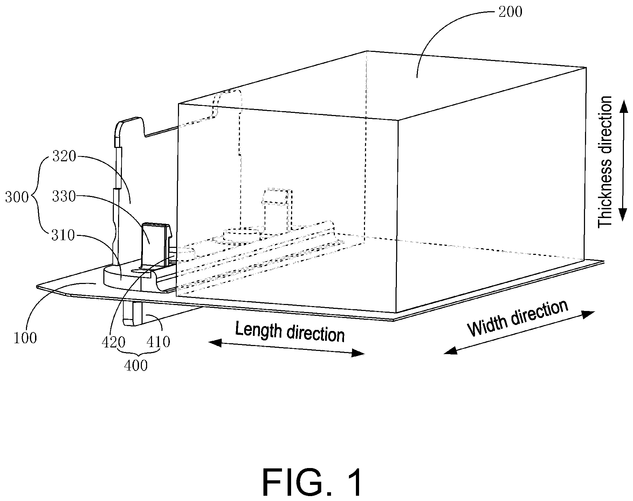

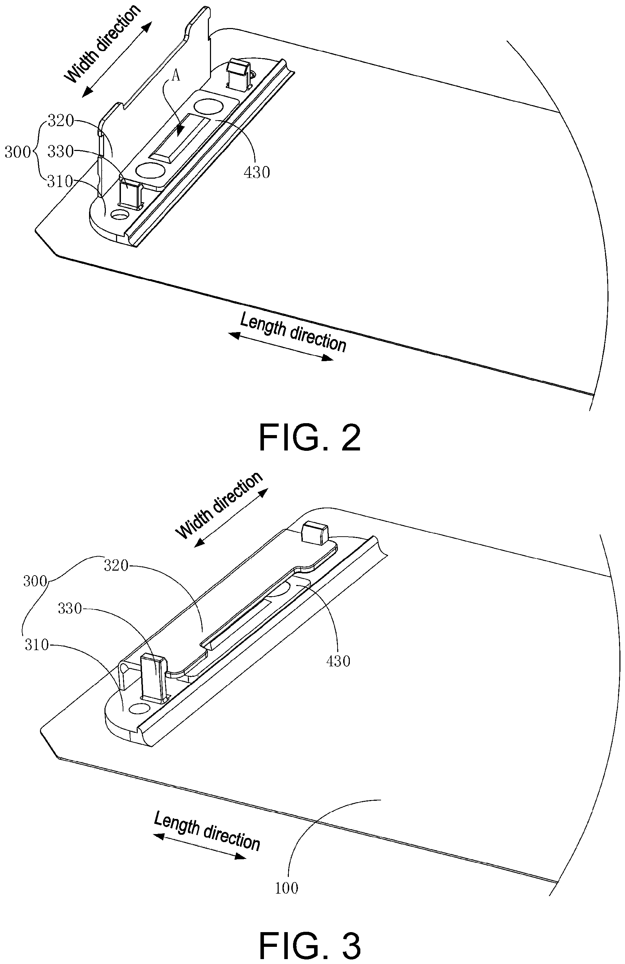

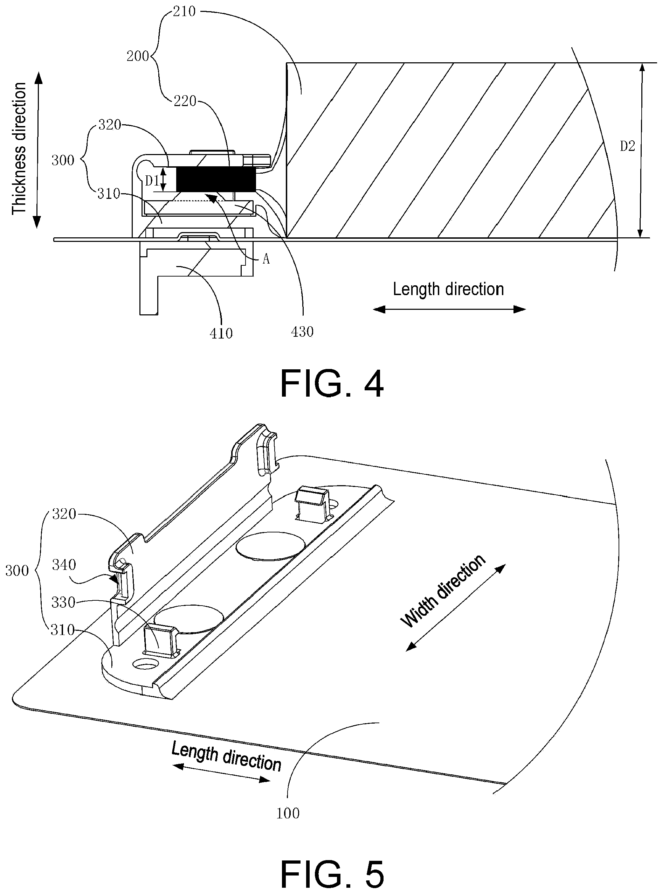

An embodiment of the present disclosure provides a battery device. FIG. 1 is a schematic structural diagram of a battery device provided in an embodiment of the present disclosure. FIG. 2 is a schematic diagram showing the unfolded state of the bent portion of the battery device provided in an embodiment of the present disclosure. FIG. 3 is a schematic diagram showing the bending state of the bent portion of the battery device provided in an embodiment of the present disclosure. FIG. 4 is a partial cross-sectional diagram of the battery device provided in an embodiment of the present disclosure. Please refer to the structures shown in FIG. 1 to FIG. 4, the battery device provided in an embodiment of the present disclosure includes: a housing 100; a cell 200, the cell 200 is arranged in the housing 100; the cell 200 includes an electrode sheet 210 and a tab portion 220 drawn from the large surface of the cell 200; an insulating support 300, the insulating support 300 is arranged in the housing 100; the insulating support 300 includes a body portion 310 and a bent portion 320, at least a part of the body portion 310 is arranged between the housing 100 and the tab portion 220; the bent portion 320 is connected to the body portion 310, and the bent portion 320 is bent to one side of the body portion 310, and cooperates with the body portion 310 to form a position-limiting space; the position-limiting space accommodates at least part of the tab portion 220, and the bent portion 320 forming the position-limiting space is disposed opposite to at least part of the large surface of the cell 200.

In order to illustrate the inner structure of the housing 100, only part of the housing 100 is shown in FIG. 1 to FIG. 4. In the meantime, the tab portion 220 after being bundled are shown in black squares. It should be understood that the drawings are only for schematic illustration and are not limited thereto.

Specifically, in the battery device provided in an embodiment of the present disclosure, the housing 100 is provided with a cell 200 and an insulating support 300. At least part of the insulating support 300 is placed between the housing 100 and the tab portion 220. For example, the position of the body portion 310 relative to the housing 100 is fixed, the bent portion 320 is connected to the body portion 310 and may be bent relative to the body portion 310 to cooperate with the body portion 310 and form a position-limiting space. At least part of the tab portion 220 in the cell 200 is placed in the position-limiting space.

When applying the battery device provided in an embodiment of the disclosure, the tab portion 220 may be placed in the body portion 310. Then the bent portion 320 is bent, and the tab portion 220 is bundled by using a bent portion 320 opposite to at least part of the large surface of the cell 200, so that the tab portion 220 is placed in the position-limiting space formed by the bent portion 320 and the body portion 310. In this manner, it is possible to reduce assembly difficulty, improve assembly efficiency, and decrease manufacturing cost.

It should be understood that the electrode sheet 210 in the cell 200 is bent or wound, and during the process of bending or winding the electrode sheet 210, the tab portion 220 is formed from the tab stack integrally drawn out from the electrode sheet 210, so that the tab portion 220 is drawn out from the large surface of the cell 200.

It should be noted that the battery device provided in an embodiment of the present disclosure forms a position-limiting space through the insulating support 300. After the multi-layer tabs are welded, the tab portion 220 may be bundled by bending the bent portion 320 to control the thickness of the tab portion 220, so as to ensure the stability of the structure of the tab portion 220 formed by the multi-layer tabs, and to avoid pseudo soldering. Meanwhile, the position-limiting space may limit the space and placement position occupied by the tab portion 220 in the housing 100 to ensure consistency between tab portions 220 in different battery devices. In this way, it is possible to improve the adaptability of the tab portions 220 in various battery devices to the space in the housing 100, thereby enhancing space utilization rate in the battery.

It should be that the battery is generally in the shape of a cuboid, with two large battery surfaces having large area and four battery side surfaces. The two battery large surfaces are opposite to each other, and the four battery side surfaces specifically include two long side surfaces and two wide side surfaces. Therefore, the battery has a length direction, a width direction, and a thickness direction. Exemplarily, when setting up the battery device provided in an embodiment of the present disclosure, as shown in FIG. 1 to FIG. 4, the bent portion 320 after bending and the body portion 310 are arranged in a direction parallel to the thickness direction.

In order to illustrate the battery device provided in an embodiment of the present disclosure more clearly, the structure is subsequently described with reference to the bent portion 320 after bending and the body portion 310 being arranged in a direction parallel to the thickness direction.

In an embodiment, please continue to refer to the structure shown in FIG. 4, one side surface of the bent portion 320 after bending and facing the body portion 310 abuts against the tab portion 220.

It should be noted that the multi-layer tabs need to be bundled after being folded. When the bent portion 320 after bending abuts against the tab portion 220, the bent portion 320 may be pressed against the multi-layer tabs to improve the bundling effect provided by insulating support 300 for the tab portion 220, thereby reducing the possibility of large gaps between multi-layer tabs and the risk of pseudo soldering.

Certainly, since the multi-layer tabs may be welded first and then placed in the position-limiting space, there might also be a possibility that the bent portion 320 does not abut against the tab portion 220, and details will not be repeated here.

In an embodiment, please continue to refer to the structures shown in FIG. 1 to FIG. 4, the battery device provided in an embodiment of the present disclosure further includes a locking portion 330, which is configured to lock the relative position of the bent portion 320 after bending relative to the body portion 310.

It should be noted that after the bent portion 320 is bent, the locking portion 330 locks the relative position of the bent portion 320 and the body portion 310, so that a stable position-limiting space is formed between the body portion 310 and the bent portion 320. Specifically, by setting the locking portion 330, it may be ensured that the position-limiting space exerts a stable and continuous pressing force on the multi-layer tabs, so as to ensure that the convergence state of the multi-layer tabs is stable, and the multi-layer tabs are tightly bonded. In this way, it is possible to improve the welding effect of tab portion 220, thereby enhancing the performance of the battery.

When specifically setting the locking portion 330, there are many possibilities for the setting position of the locking portion 330, and include at least one of the following several settings.

In an embodiment, the locking portion 330 is disposed on the body portion 310 of the insulating support 300, and at least part of the body portion 310 is disposed parallel to the large surface of the cell 200.

It should be noted that the locking portion 330 may be provided only on the body portion 310 to facilitate the arrangement of the locking portion 330.

Certainly, the locking portion 330 may also be disposed on the bent portion 320 of the insulating support 300; or, the locking portion 330 may be simultaneously disposed on both the body portion 310 and the bent portion 320 of the insulating support 300, which will not be repeated here.

In another embodiment, the locking portion 330 is disposed on a large surface of the housing 100 to simultaneously enhance the stability of the insulating support 300 relative to the housing 100.

In another embodiment, the battery device provided in an embodiment of the present disclosure further includes a pole assembly 400 (as shown in FIG. 1), at least part of the pole assembly 400 penetrates into the position-limiting space from the outside of the housing 100. The pole assembly 400 is electrically connected to the tab portion 220, and the locking portion 330 is disposed on the pole assembly 400 disposed in the position-limiting space.

It should be noted that this structural setting may improve the stability of the insulating support 300 relative to the pole assembly 400, thereby improving the structural stability of the position-limiting space and ensuring the convergence effect on the tab portion 220.

In a specific embodiment, please continue to refer to the structure shown in FIG. 1 to FIG. 3, the locking portion 330 includes a hook, the hook is provided on the body portion 310, and the hook is engaged with one side of the bent portion 320 after bending away from the body portion 310.

It should be noted that the hook has a simple structure and is easy to operate, so that the difficulty of assembly operation may be reduced. In the meantime, since the locking portion 330 is disposed on the body portion 310, when the tab portion 220 is disposed on the body portion 310, the locking portion 330 may be avoided directly, so as to prevent the locking portion 330 from puncturing or cutting the tab portion 220 when locking, thereby improving safety performance of the battery.

Moreover, it should be noted that when the locking portion 330 is set as a hook, the locking effect of the locking portion 330 on the bent portion 320 after bending and the body portion 310 may be enhanced, so as to improve the stability of the bent portion 320 relative to the body portion 310 and ensure that the position-limiting space is able to stably and effectively exert pressure on the tab portion 220. In this way, the convergence effect on the tab portion 220 may be improved.

Certainly, the locking portion 330 may also have other structures. For example, the locking portion 330 may include two magnetic members, one of which is set on the body portion 310, and the other is set on the bent portion 320. Or, the locking portion 330 may include fixing holes and straps. The fixing holes are set on the body portion3 10 and the bent portion 320. The straps may pass through the fixing holes on the body portion 310 and the fixing holes on the bent portion 320 to realize the function of limiting the position of the body portion 310 and the bent portion 320.

It should be understood that the locking portion 330 may further be configured in other structures according to requirements, and the details will not be repeated here.

In an embodiment, please refer to the structure shown in FIG. 5, the edge of the bent portion 320 is provided with a protrusion, the protrusion protrudes toward the body portion 310, and one side of the protrusion away from the body portion 310 is a groove 340; the hook engages with the bottom of the groove 340.

It should be noted that, along the thickness direction, the protruding size of the protrusion matches the size of the hook. In the setting, the size of the hook in the thickness direction may be reduced, so it is possible to prevent the hook from excessively protruding out of the body portion 310 and damaging the tab portion 220 accidentally.

In the meantime, since the hook is engaged in the groove 340 in this setting, the side wall of the groove 340 may limit the position of the hook to prevent the hook from coming out of the groove 340, and the stability of the locking portion 330 may be improved.

In addition, it should be noted that along the length direction, the matching configuration of the groove 340 and the hook may limit the placement position of the tab portion 220 on this side, thus preventing the tab portion 220 from coming out of the position-limiting space, and further improving the stability of the connection relationship between the tab portion 220 and the pole assembly 400.

In an embodiment, please continue to refer to the structures shown in FIG. 1 to FIG. 5, the hook is provided with a guide surface, and the guide surface is configured to guide the bent portion 320 during bending, so that the locking portion 330 is engaged with the bent portion 320 and the body portion 310.

It should be noted that by setting the guide surface on the hook, the difficulty of assembly may be reduced and the assembly speed may be improved.

In an embodiment, please continue to refer to the structures shown in FIG. 1 to FIG. 5, the locking portion 330 includes two hooks, the two hooks are arranged opposite to each other, and each hook is engaged with the end portion at one side of the bent portion 320. Exemplarily, as shown in FIG. 3, the two hooks are disposed opposite to each other along the width direction, so that the insulation support 300 forms an opening on one side facing the cell 200, so that the tab portion 220 is disposed in the position-limiting space.

It should be noted that, the above-mentioned arrangement enables the locking portion 330 to lock the bent portion 320 at both ends, so that the bent portion 320 exerts a stable pressing force on all parts of the tab portion 220, thereby improving the convergence effect of the position-limiting space. In the meantime, since the hooks are fastened to the end portion at each side of the bent portion 320, the hooks are able to effectively avoid the tab portion 220, so that the tab portion 220 is able to be conveniently placed in the position-limiting space.

Certainly, the number of hooks is not limited to two, and multiple hooks may be set to be connected to the end portion at each side of the bent portion 320 to improve the fixing effect. Certainly, the plurality of hooks may be set at equal or unequal intervals, which may be set according to requirements and will not be repeated here.

In another specific embodiment, the body portion 310 and the bent portion 320 are connected by bonding. It should be understood that the adhesive connection is simple and easy to operate, and may reduce the difficulty of assembly operation.

In an embodiment, the insulating support 300 is an integrated structure.

It should be noted that the integrated structure may simplify the preparation process, improve the preparation efficiency, and reduce the manufacturing cost.

In a specific embodiment, the connection between the body portion 310 and the bent portion 320 may be a vulnerable portion, so that the bent portion 320 may be folded relative to the body portion 310 under the action of an external force.

In another specific embodiment, the body portion 310 may be a vulnerable portion as a whole, so as to reduce the volume under the premise of performing the insulating effect.

In another embodiment, the body portion 310 and the bent portion 320 are separate structures.

It should be noted that the body portion 310 and the bent portion 320 may be prepared separately according to requirements, and a connection structure may be provided between them.

It should be noted that the connection structure does not affect the bending performance of the bent portion 320 relative to the body portion 310.

In an embodiment, please continue to refer to the structure shown in FIG. 4, the position-limiting space has an opening facing the electrode sheet 210.

It should be noted that the opening of the position-limiting space is the opening through which the tab portion 220 is placed in or taken out of the position-limiting space. By setting the opening to face the electrode sheet 210, it is possible for the tab portion 220 drawn from the electrode sheet 210 to be directly inserted into the position-limiting space, so that the extent at which the tab portion 220 is bent may be reduced, thereby further reducing difficulty of assembly and improving assembly efficiency.

In an embodiment, along the arrangement direction of the bent portion 320 after bending and the body portion 310, the thickness of the position-limiting space is D1, the thickness of cell 200 is D2, and the ratio of D1 to D2 is in the range of 0.05 to 0.5.

It should be noted that if the ratio of D1 to D2 is too large, the size of the position-limiting space will be too large to bundle the tab portion 220, and consequently there will be large gaps between the multi-layer tabs inside the tab portion 220, which will in turn cause pseudo soldering. Moreover, the insulating support 300 will take up too much space, which cannot effectively improve the space utilization rate of the battery device. If the ratio of D1 to D2 is too small, the size and thickness of the position-limiting space will be too small, and the tab portion 220 will not be effectively placed in the position-limiting space, which will consequently cause the risk of deformation of multi-layer tab folds in the tab portion 220. When the ratio of D1 to D2 is set to the range specified above, the above two problems may be avoided properly.

In specific settings, the ratio of D1 to D2 may be set to any one of the following values: 0.05, 0.06, 0.07, 0.08, 0.09, 0.10, 0.11, 0.12, 0.13, 0.14, 0.15, 0.16, 0.17, 0.18, 0.19, 0.20, 0.25, 0.30, 0.35, 0.40, 0.45, 0.50.

It should be understood that the ratio of D1 to D2 is not limited to the above examples, and may be specifically set according to requirements, which will not be repeated here.

Please continue to refer to the structures shown in FIG. 1 to FIG. 6, at least part of the tab portion 220 in the cell 200 is placed in the position-limiting space, and the tab portion 220 placed in the position-limiting space is electrically connected to the pole assembly 400 penetrating into the position-limiting space to realize the electrical connection between the cell 200 and the pole assembly 400.

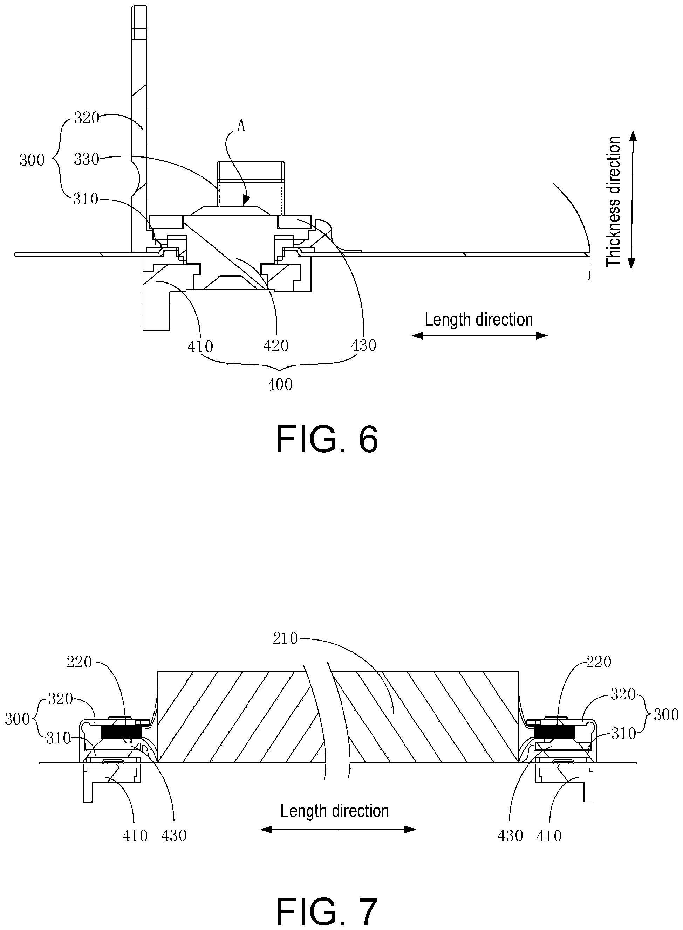

In an embodiment, please continue to refer to the structure shown in FIG. 6, the body portion 310 is provided with a counterbore (not shown), the opening of the counterbore is located on one side of the body portion 310 facing the tab portion 220, and the bottom of the counterbore is provided with a through hole.

The pole assembly 400 includes a pole 410 and a position-limiting sheet 420, the pole 410 is arranged outside the housing 100. The position-limiting sheet 420 is arranged inside the housing 100, and at least part of the position-limiting sheet 420 is embedded in the counterbore and penetrates through the through hole so as to electrically connect the pole 410 with the tab portion 220.

As shown in FIG. 6, at least part of the position-limiting sheet 420 is placed in the counterbore, and the size of this part of the position-limiting sheet 420 is larger than the size of the through hole. Therefore, the position-limiting sheet 420 may serve to limit position and prevent a part of the pole 410 extending into the housing 100 from falling out of the housing 100. In this way, it is possible to improve the stability of the relative position of the pole assembly 400 and the housing 100, so as to ensure the stability of the connection between the pole assembly 400 and the tab portion 220, thereby improving the service life of the battery device.

It should be understood that the shape of the counterbore is not limited to a circle, and may also be set in a square, triangular or other shape according to requirements, which may be specifically set according to requirements, and will not be repeated here.

It should be noted that the insulating support 300 is provided with one or more counterbores corresponding to each pole 410, and each counterbore is provided with a position-limiting sheet 420. Each position-limiting sheet 420 is connected to the same pole 410, thereby increasing the connection area between the pole 410 and the tab portion 220, and improving the current-carrying capacity.

In the meantime, since each pole 410 is fixed relative to the insulating support 300 through a plurality of position-limiting sheet 420, the stability of the pole 410 may be improved, thereby ensuring the stability of the connection between the tab portion 220 and the pole 410, and improving the service life of the battery device.

In an embodiment, please continue to refer to the structures shown in FIG. 2 to FIG. 6, the pole assembly 400 further includes an adapter sheet 430. The adapter sheet 430 is placed in the position-limiting space, and the adapter sheet 430 is located between the tab portion 220 and the body portion 310. The adapter sheet 430 is electrically connected to the position-limiting sheet 420 and the tab portion 220.

It should be noted that the adapter sheet 430 is electrically connected with the position-limiting sheet 420 and the tab portion 220 respectively to serve the switching function between the pole 410 and the tab portion 220. In this way, it is possible to increase the connection area to ensure the current-carrying capability, thereby improving the performance of the battery.

It should be noted that when each pole 410 is limited in position relative to the insulating support 300 through a plurality of position-limiting sheet 420, each adapter sheet 430 is connected with a plurality of position-limiting sheet 420 to ensure the current-carrying area between the adapter sheet 430 and the pole 410 to improve the current-carrying capacity.

In an embodiment, referring to the structures shown in FIG. 2 to FIG. 6, a protruding structure A is provided on one side of the adapter sheet 430 away from the body portion 310, and the protruding structure A abuts against the tab portion 220.

It should be noted that, by forming the protruding structure A on the adapter sheet 430, it is possible to reduce the size of the position-limiting space in the thickness direction to improve the position-limiting and pressing effects on the tab portion 220. In this way, it is possible to prevent large gaps between multi-layer tabs from causing pseudo soldering, thereby improving the position-limiting effect of the insulating support 300 on the tab portion 220.

When specifically setting the protruding structure A on the adapter sheet 430, there are many possibilities for the preparation of the protruding structure A, including at least one of the following possibilities.

In a specific embodiment, the protruding structure A is a reinforcing rib formed on the adapter sheet 430. It should be noted that, on the one hand, this arrangement may enhance the structural strength of the protruding structure A, and ensure that after the bent portion 320 is bent relative to the body portion 310, the protruding structure A may exert sufficient pressing force on the tab portion 220, thereby improving convergence effect on the tab portion 220 and ensure the connection effect between the tab portion 220 and other structures; on the other hand, this setting may ensure the connection area between the adapter sheet 430 and the position-limit sheet 420, so as to ensure the current-carrying capability, thereby improving the structural performance of the battery.

In another specific embodiment, the protruding structure A is formed by stamping the adapter sheet 430. In other words, the other side of the adapter sheet 430 opposite to the protruding structure A is a concave structure.

It should be noted that, in order to ensure the connection area between the adapter sheet 430 and the position-limiting sheet 420, the stamping position of the protruding structure A needs to be set according to requirements, and the details will not be repeated here.

In an embodiment, the insulating support 300 is made of an insulating material. Exemplarily, the insulating material may be selected from PC (polycarbonate), or, PP (polypropylene), or one or more of composite materials PC and ABS (acrylonitrile butadiene styrene copolymers).

In an embodiment, please continue to refer to the structure shown in FIG. 1, and the insulating support 300 is made of lower plastic.

It should be noted that the body portion 310 of the insulating support 300 may be set as a lower plastic to seal the pole assembly 400, thereby ensuring the sealing performance of the battery device.

When specifically setting the insulating support 300, for example, the existing lower plastic part may be extended to form the bent portion 320 of the insulating support 300. Exemplarily, the lower plastic may be extended to a size of a hinge to form a bent portion 320.

It should be noted that the tab portion 220 of the battery is drawn from at least one end of the large surface of the cell 200, as shown in FIG. 7. When the tab portion 220 is drawn from the opposite ends of the large surface of the cell 200, it may be set that the tab portion 220 on each side is limited in position through one insulating support 300. Exemplarily, please continue to refer to the structure shown in FIG. 7, the battery includes two poles 410 arranged opposite to each other, the two poles 410 are arranged opposite to each other along the length direction, and each pole 410 is connected to the tab portion 220 on this side.

It should be noted that at least one insulating support 300 of the two insulating supports 300 may be set as above, certainly, it is also possible to carry out the above-mentioned settings only on the two insulating supports 300, and the details will not be repeated here.

It should be understood that the polarities of the two poles 410 are opposite, when one pole 410 is a pole 410 of positive polarity, the other pole 410 is a pole 410 of negative polarity; otherwise, when one pole 410 is a pole 410 of negative polarity, the other pole 410 is a pole 410 of positive polarity. As shown in FIG. 7, the two poles 410 are arranged on the same side of the battery. Certainly, the two poles 410 may also be arranged on opposite sides of the battery in the length direction according to requirements. Specifically, the configuration may be set according to requirements, and the details are not repeated here.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery device, comprising:
a housing (100);
a cell (200), which is arranged in the housing (100); wherein the cell (200) comprises an electrode sheet (210) and a tab portion (220) drawn from a large surface of the cell (200);
an insulating support (300), which is arranged in the housing (100); wherein the insulating support (300) comprises a body portion (310) and a bent portion (320), at least a part of the body portion (310) is arranged between the housing (100) and the tab portion (220); the bent portion (320) is connected to the body portion (310), and the bent portion (320) is bent to one side of the body portion (310), and cooperates with the body portion (310) to form a position-limiting space; wherein the position-limiting space accommodates at least a part of the tab portion (220), and the bent portion (320) forming the position-limiting space is disposed opposite to at least a part of the large surface of the cell (200).

2. The battery device according to claim 1, wherein one side surface of the bent portion (320) after bending and facing the body portion (310) abuts against the tab portion (220).

3. The battery device according to claim 2, further comprising a locking portion (330), which is configured to lock a relative position of the bent portion (320) after bending relative to the body portion (310).

4. The battery device according to claim 3, wherein the locking portion (330) is disposed on the body portion (310) of the insulating support (300), and the at least part of the body portion (310) is disposed parallel to the large surface of the cell (200).

5. The battery device according to claim 3, wherein the locking portion (330) is disposed on a large surface of the housing (100); or,
the battery device further comprises a pole assembly (400), at least a part of the pole assembly (400) penetrates into the position-limiting space from outside of the housing (100), the pole assembly (400) is electrically connected to the tab portion (220), and the locking portion (330) is disposed on the pole assembly (400) disposed in the position-limiting space.

6. The battery device according to claim 4, wherein the locking portion (330) comprises a hook, the hook is provided on the body portion (310), and the hook is engaged with one side of the bent portion (320) after bending away from the body portion (310).

7. The battery device according to claim 6, wherein an edge of the bent portion (320) is provided with a protrusion, the protrusion protrudes toward the body portion (310), and one side of the protrusion away from the body portion (310) is a groove (340);
wherein the hook engages with a bottom of the groove (340).

8. The battery device according to claim 7, wherein the locking portion (330) comprises two hooks, the two hooks are arranged opposite to each other, and each of the hooks is engaged with an end portion at one side of the bent portion (320).

9. The battery device according to any one of claims 1-8, wherein the insulating support (300) is an integrated structure.

10. The battery device according to any one of claims 1-8, wherein the position-limiting space has an opening facing the electrode sheet (210).

11. The battery device according to any one of claims 1-8, wherein along an arrangement direction of the bent portion (320) after bending and the body portion (310), a thickness of the position-limiting space is D1, a thickness of the cell (200) is D2, and a ratio of D1 to D2 is in a range of 0.05 to 0.5.

12. The battery device according to any one of claims 1-8, wherein the body portion (310) is provided with a counterbore, an opening of the counterbore is located on one side of the body portion (310) facing the tab portion (220), and a bottom of the counterbore is provided with a through hole;
wherein the battery device further comprises a pole assembly (400) comprising a pole (410) and a position-limiting sheet (420), the pole (410) is arranged outside the housing (100); the position-limiting sheet (420) is arranged inside the housing (100), and at least a part of the position-limiting sheet (420) is embedded in the counterbore and penetrates through the through hole so as to electrically connect the pole (410) with the tab portion (220).

13. The battery device according to claim 12, wherein the pole assembly (400) further comprises an adapter sheet (430), the adapter sheet (430) is placed in the position-limiting space, and the adapter sheet (430) is located between the tab portion (220) and the body portion (310); the adapter sheet (430) is electrically connected to the position-limiting sheet (420) and the tab portion (220).

14. The battery device according to claim 13, wherein a protruding structure is provided on one side of the adapter sheet (430) away from the body portion (310), and the protruding structure abuts against the tab portion (220).

15. The battery device according to any one of claims 1-8, wherein the tab portion (220) is drawn from opposite sides of the large surface of the cell (200), and at least part of the tab portion (220) on each side is disposed in the position-limiting space of the corresponding insulating support (300).
